# EUROPÄISCHE PATENTSCHRIFT

(11) **EP 0 230 950 B1**
(45) Veröffentlichungstag und Bekanntmachung des Hinweises auf die Patenterteilung: **25.05.1994**
(21) Anmeldenummer: 87100636.7
(22) Anmeldetag: 19.01.1987
(51) Int. Cl.: G03G 9/08, G03G 5/06

(54) **Farbmittel für elektrophotographische Aufzeichnungsverfahren**
Colouring agent for electrophotographic recording processes
Agent colorant pour des procédés d'enregistrement électrophotographique

(30) Priorität: 25.01.1986 DE 3602182
(43) Veröffentlichungstag der Anmeldung: 05.08.1987
(73) Patentinhaber: HOECHST AKTIENGESELLSCHAFT, 65926 Frankfurt am Main (DE)
(72) Erfinder: Macholdt, Hans-Tobias, Dr., D-6100 Darmstadt (DE); Sieber, Alexander, Dr., D-6230 Frankfurt am Main 80 (DE); Tröster, Helmut, Dr., D-6240 Königstein/Taunus (DE)

(56) Entgegenhaltungen:
- PATENT ABSTRACTS OF JAPAN vol. 9, no. 62 (P-342)(1785) 19 März 1985,& JP A 59197049

## Beschreibung

Die vorliegende Erfindung betrifft neue Toner für elektrophotographische Aufzeichnungsverfahren, der Mischkristalle von Pigmenten auf Basis von substituierten Pervlentetracarbonsäure-diphenylimiden enthält.

Der Erfindung lag die Aufgabe zugrunde, Toner für elektrophotographische Aufzeichnungsverfahren aufzufinden, welche verbesserte Eigenschaften für die genannte Anwendung aufweisen und aus nicht mehr als zwei Komponenten bestehen.

Beim elektrophotographischen Aufzeichnungsverfahren wird beispielsweise auf einer Photoleitertrommel ein "latentes Ladungsbild" erzeugt. Dies gelingt durch Aufladung der Photoleitertrommel durch eine Corona-Entladung und anschließende bildmäßige Belichtung der elektrostatisch aufgeladenen Oberfläche der Photoleitertrommel, wobei durch die Belichtung der Ladungsabfluß zur geerdeten Unterlage an den belichteten Stellen bewirkt wird. Anschließend wird das so erzeugte "latente Ladungsbild" durch Aufbringen eines Toners entwickelt.

In einem darauffolgenden Schritt wird der Toner von der Photoleitertrommel auf beispielsweise Papier, Textilien, Folien oder Kunststoff übertragen und dort beispielsweise durch Druck, Strahlung, Hitze oder Lösungsmitteleinwirkung fixiert. Der benutzte Photoleiter wird anschließend gereinigt und steht für einen neuen Aufzeichnungsvorgang zur Verfügung.

In zahlreichen Patentschriften wird die Optimierung von Tonern beschrieben, wobei u.a. der Einfluß des Tonerbindemittels (Variation von Harz/Harzkomponenten oder Wachs/Wachskomponenten), der Einfluß von Steuermitteln oder anderen Zusatzstoffen oder der Einfluß von Carriern( bei Zweikomponentenentwicklern) und Magnetpigmenten (bei Einkomponentenentwicklern) untersucht wurden (US-PS 2 221 776).

Ein Maß für die Tonerqualität ist seine spezifische Aufladbarkeit Q/M (Ladung pro Masseeinheit).

Aus der Patentliteratur ist die Verwendung von zahlreichen organischen Pigmenten und Farbstoffen verschiedener Klassen, wie beispielsweise Monoazo-, Disazo-, Benzidin-, Kupferphthalocyanin- und Perylentetracarbonsäurederivate, zum Anfärben von Tonern für farbige Kopien oder Drucke bekannt.

Zur Herstellung von roten Tonern haben sich in der Praxis neben gegebenenfalls verlackten Monoazopigmenten, wie beispielsweise C.I. Pigment Red 48 (15 865) vor allem Perylentetracarbonsäurederivate, wie C.I. Pigment Red 149 (71 137) bewährt. Dabei ist die Verwendung des hochwertigen C.I. Pigment Red 149 nicht nur wegen seiner besseren Echtheitseigenschaften, sondern vor allem wegen seines guten triboelektrischen Verhaltens in Rot-Tonern vorteilhaft.

Eine weitere Verbesserung von Tonern wird in der JA-OS 59/219 756 und JA-OS 59/220 750 beschrieben. In der erstgenannten JA-OS wird ein Rot-Toner beschrieben, dem durch den Gehalt einer Mischung aus beispielsweise C.I. Pigment Red 149 und C.I. Pigment Red 222 seine günstigen Tonereigenschaften zukommt. (Bei den Pigmentmischungen in Tonern handelt es sich lediglich um eine Vermengung der Pigmente im Tonerbindemittel.) Gemäß den Angaben in der an zweiter Stelle genannten JA-OS wird durch Anwendung einer Mischung aus C.I. Pigment Red 149 und C.I. Pigment Red 177 (65 300) ein analoger günstiger Effekt erzielt.

Gemäß der JA-OS 59/197 049 werden dem Toner zur Verbesserung der triboelektrischen Aufladbarkeit bestimmte substituierte Perylentetracarbonsäure-Derivate zugesetzt. Obwohl offen bleibt, ob durch einen derartigen Zusatz der Standard von C.I. Pigment Red 149 übertroffen werden kann, so ist ein derartiger Zusatz insofern mit gewissen Problemen behaftet, als die ohnehin komplexen Toner-Rezepturen um mindestens 1 Bestandteil erweitert werden müssen, was bedingt, daß Pigmentunverträglichkeiten, Mischungsprobleme und abweichende Farbnuancen mit in Betracht gezogen werden müssen.

Eine neuere Entwicklung stellt die Verwendung von Mischkristallen organischer Pigmente bei der Herstellung elektrophotographischer Toner dar. So wird in der EP-OS 0 042 816 die Eignung von "Pigmentlegierungen" für Toner auf dem Gebiet der Elektrophotographie beschrieben. Unter "Pigmentlegierungen" werden hierbei Mischkristalle verstanden, welche durch inniges Vermahlen von Pigmenten aus zwei gänzlich verschiedenen Pigmentklassen (beispielsweise C.I. Pigment-Gelb 110 (Isoindolenin-Pigment) und Perylentetracarbonsäureimid) erhalten werden.

Demgegenüber wurde nun überraschenderweise gefunden, daß Mischkristalle auf Basis bestimmter Perylentetracarbonsäure-diphenylimide sich in höherem Maße als Farbmittel für elektrophotographische Aufzeichnungsverfahren als die hierfür bekannten Mischkristalle eignen, indem zur Herstellung eines geeigneten und hochwirksamen Toners für den inredestehenden Zweck lediglich ein System aus zwei Bestandteilen bestehend aus Tonerbindemittel (Polymer) und Pigment (Mischkristall), jedoch kein Steuermittel oder lediglich eine beschränkte Menge eines zusätzlichen Steuermittels benötigt wird, weil der farbgebende Mischkristall zusätzlich die Funktion des Steuermittels übernimmt, was eine große Vereinfachung gegenüber bekannten Tonern, die aus drei oder mehr Bestandteilen bestehen, darstellt.

Die erfindungsgemäß eingesetzten Mischkristalle weisen überraschenderweise auch ausgeprägtere triboelektrische Eigenschaften als das C.I. Pigment Red 149 auf.

Gegenstand der vorliegenden Erfindung sind somit elektrophotographische Toner, bestehend aus einem Tonerbindemittel und aus Mischkristallen mit 99-70 Teilen Verbindung der nachstehenden Formel I und 1-30 Teilen Verbindung der nachstehenden Formel II 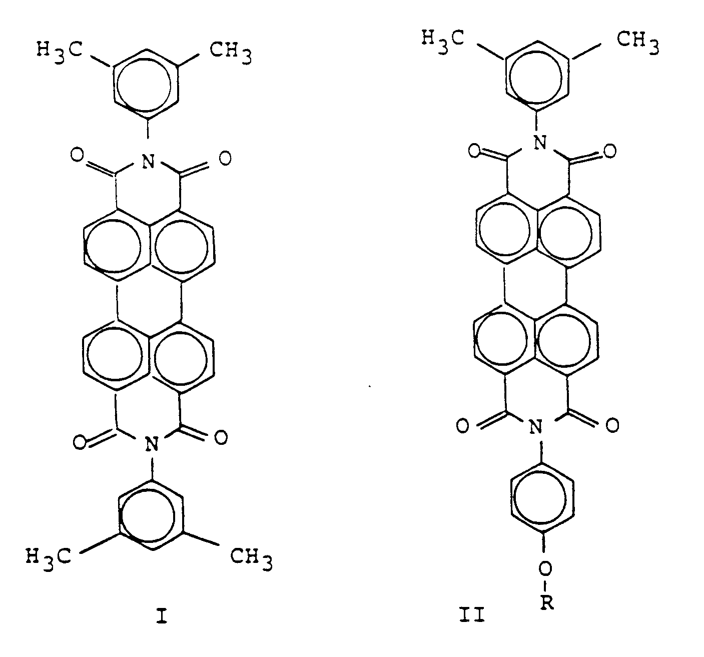
wobei R in Formel II eine Alkyl_{C1-C4}-gruppe bedeutet, insbesondere die Verwendung der besagten Mischkristalle zur Herstellung von Tonern, die zum elektrophotographischen Kopieren bzw. Vervielfältigen von Vorlagen sowie zum Drucken von elektronisch, optisch oder magnetisch gespeicherten Informationen eingesetzt werden.

Die in den erfindungsgemäßen Tonern zugrundeliegenden Mischkristallpigmente und/oder deren Herstellung werden in den deutschen Patentanmeldungen DE-A1-34 36 206 und DE-A1-34 36 208 beschrieben.

Im Falle einer völligen Verzichtbarkeit des Zusatzes eines gesonderten Steuermittels bei den erfindungsgemäßen Farbmitteln, welches als dritter Bestandteil bei der Tonerherstellung zugesetzt werden müßte, können die Probleme, die bei Zusatz eines Steuermittels auftreten können, wie unerwünschte Beeinflussung des Farbtons durch inhomogene Verteilung des Steuermittels im Toner oder allmähliches Auswandern des Steuermittels aus dem Toner, grundsätzlich vermieden werden. Kann auf den Zusatz eines gesonderten Steuerungsmittels nicht ganz verzichtet werden, so kann doch immerhin die erwähnte Problematik reduziert werden.

Die Höhe der elektrostatischen Aufladung des Toners unter Verwendung von Mischkristallen aus Verbindungen der vorstehend genannten Formeln (I) und (II) im angegebenen Mischungsverhältnis wurde an Standardsystemen unter gleichen Bedingungen (wie gleiche Dispergierzeiten, gleiche Teilchengrößenverteilung, gleiche Teilchenform) bei 23°C und 50 % relativer Luftfeuchtigkeit gemessen. Die Aktivierung des Toners in einem Zweikomponentenentwickler erfolgt durch Verwirbelung des Toners mit einem Carrier (3 Teile Toner auf 97 Teile Carrier) 30 Minuten auf einer Rollbank (150 Umdrehungen pro Minute).

Die nachstehenden Beispiele dienen zur Erläuterung der Erfindung, ohne sie darauf zu beschränken. Die angegebenen Teile bedeuten Gewichtsteile.

### Beispiel 1

5 Teile Pigment (Mischkristall aus den Verbindungen der weiter oben genannten Formeln I und II (R = C₂H₅) im Mengenverhältnis von ca. 90:10) wurden mittels eines Kneters der Firma Werner & Pfleiderer (Stuttgart) 90 Minuten in 95 Teilen Tonerbindemittel (^{(R)}Dialec S 309 der Firma Diamond Shamrock (Styrol-Methacryl-Copolymer)) dispergiert. Anschließend wurde auf einer Laboruniversalmühle 100 LU der Firma ALPINE (Augsburg) gemahlen und dann auf dem Zentrifugalsichter 100 MZR der Firma ALPINE klassifiziert. Die Teilchenfraktion 4-25 µm wurde mit einem Carrier aus mit Styrol-Methacrylat 90:10 beschichteten Magnetit-Teilchen der Größe 50-200µm des Typs 90µm Xerographic Carrier der Firma PLASMA MATERIALS INC. aktiviert. Die Messung der triboelektrischen Aufladbarkeit erfolgt an einem üblichen Q/M Meßstand [vgl. hierzu J.H. Dessauer, H.E. Clark "Xerography and related Processes", Focal Press, N.Y. 1965, Seite 289].

Der Q/M-Wert wurde zu -18,9 µC/g ermittelt.

### Beispiel 2

Es wurde, wie in Beispiel 1 beschrieben, gearbeitet mit dem Unterschied, daß als Pigment ein Mischkristall aus den Verbindungen der genannten Formeln I und II (R= C₂H₅) im Mengenverhältnis ca. 97:3 eingesetzt wurde.

Der Q/M-Wert wurde zu -17,2 µC/g ermittelt.

### Beispiel 3

Es wurde, wie in Beispiel 1 beschrieben, gearbeitet mit dem Unterschied, daß als Pigment das C.I. Pigment Red 149 (hergestellt gemäß Beispiel 1 der DE-PS 1 067 157) verwendet wurde.

Der Q/M-Wert wurde zu -7,1 µC/g ermittelt

## Patentansprüche

1. Elektrophotographischer Toner, bestehend aus einem Tonerbindemittel und Mischkristallen mit 99-70 Teilen einer Verbindung der nachstehenden Formel I und 1-30 Teilen einer Verbindung der nachstehenden Formel II 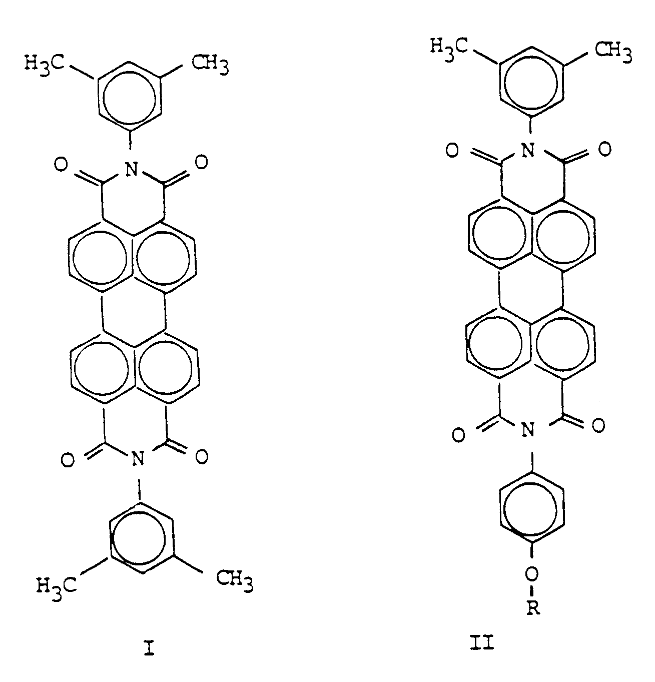 wobei R in Formel II eine Alkyl_{C1-C4}-gruppe bedeutet.

2. Verwendung der in Anspruch 1 genannten Mischkristalle zur Herstellung von Tonern oder Entwicklern, die zum elektrophotographischen Kopieren bzw. Vervielfältigen von Vorlagen sowie zum Drucken von elektronisch, optisch oder magnetisch gespeicherten Informationen eingesetzt werden.

## Claims

1. An electrophotographic toner comprising a toner binder and mix-crystals with 99-70 parts of a compound of the following formula I and 1-30 parts of a compound of the following formula II 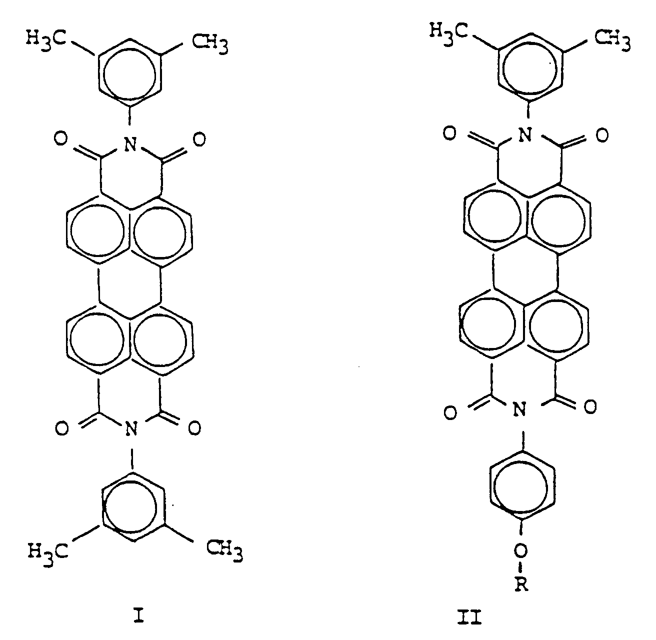 where R in formula II denotes a C₁-C₄-alkyl group.

2. Use of the mix-crystals mentioned in claim 1 for preparing toners or developers which are used for the electrophotographic copying or duplicating of originals and for printing electronically, optically or magnetically stored information.

## Revendications

1. Toner électrophotographique consistant en un liant de toner et en solutions solides comportant 99-70 parties d'un composé de formule ci-dessous I et 1-30 parties d'un composé de formule ci-dessous II 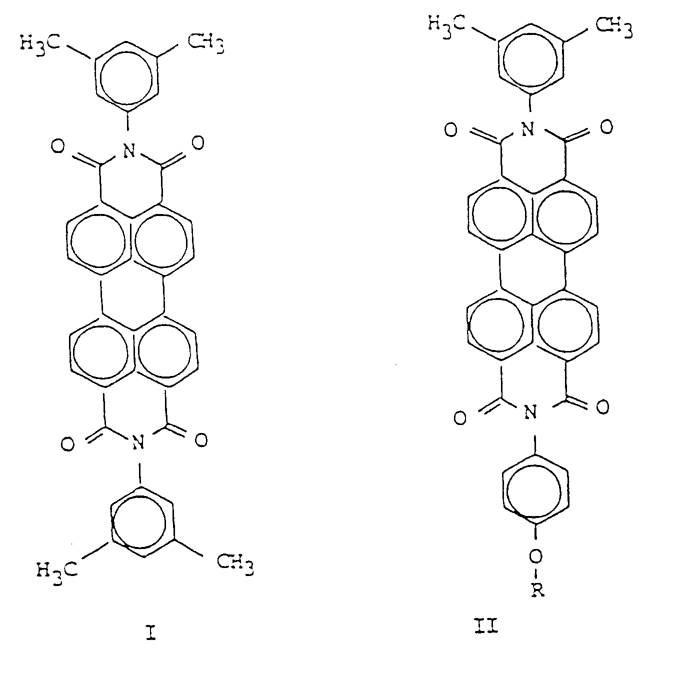 dans lesquelles R, dans la formule II, représente un groupe alkyle en C₁-C₄.

2. Utilisation des solutions solides citées dans la revendication 1 pour la préparation de toners ou de révélateurs qui peuvent être utilisés pour le tirage ou la copie électrophotographique de documents ainsi que pour l' impression d'informations sur support électronique, optique ou magnétique.
